# EUROPÄISCHE PATENTSCHRIFT

(11) **EP 3 350 463 B1**
(45) Veröffentlichungstag und Bekanntmachung des Hinweises auf die Patenterteilung: **09.10.2019**
(21) Anmeldenummer: 16748264.5
(22) Anmeldetag: 26.07.2016
(51) Int. Cl.: F16C 19/38, F16C 17/02, F16C 17/10, F16C 21/00, F16C 33/58, F16C 33/60

(54) **DREHLAGER**
ROTARY BEARING
PALIER DE ROTATION

(30) Priorität: 18.09.2015 DE 202015006588 U
(43) Veröffentlichungstag der Anmeldung: 25.07.2018
(73) Patentinhaber: Liebherr-Components Biberach GmbH, 88400 Biberach an der Riß (DE)
(72) Erfinder: SAUTER, Herbert, 88400 Biberach (DE)
(74) Vertreter: Thoma, Michael
(86) Internationale Anmeldenummer: PCT/EP2016/001293
(87) Internationale Veröffentlichungsnummer: WO 2017/045734

(56) Entgegenhaltungen:
- WO-A2-2008/088213
- DE-A1-102011 083 824
- DE-C1- 19 962 978
- DE-U1- 20 202 463
- DE-U1-202007 002 609
- US-A1- 2009 022 442

## Beschreibung

Die vorliegende Erfindung betrifft ein Drehlager, insbesondere ein mittenfreies Großringlager, mit zwei konzentrischen Laufringen, von denen der eine Laufring eine zum anderen Laufring hin offene Nut und der andere Laufring einen in die genannte Nut eingreifenden Nasenring umfasst, wobei der Nasenring an der Nut in axialen und radialen Richtungen des Drehlagers durch mehrere Lagerbaugruppen abgestützt ist, die zumindest zwei Axiallager, die auf gegenüberliegenden Nasenringstirnseiten angeordnet sind, und zumindest ein Radiallager, das auf einer Nasenringmantelfläche angeordnet ist, umfassen.

Solche Drehlager sind beispielsweise aus den Schriften US 2009/022442 A1, DE 202 02 463 U1, DE 10 2011 083 824 A1, DE 20 2007 002 609 U1 oder WO 2008/088213 A2 bekannt. Dabei zeigt beispielsweise die Schrift US 2009/0022442 A1 ein Großwälzlager für eine Windturbine, mittels dessen ein Rotorblatt an der Nabe der Windturbine gelagert und in seinem Pitchwinkel verstellt werden kann.

Bei Großringlagern für spezielle Einsatzzwecke wirken bisweilen beträchtliche Biegemomente und Kippkräfte auf die Lagerringe, die zu Verwindungen und einem Winkelversatz der Laufringe zueinander führen können, so dass vorzeitiger Verschleiß im Bereich der Laufringe und Wälzkörper eintritt. Solche Großwälzlager können Maße von mehreren Metern im Durchmesser aufweisen und bspw. an Kranen eingesetzt werden, um bspw. den Abstützmast eines Schiffskrans oder Hafenkrans drehbar zu lagern und abzustützen, wobei hier nicht nur vertikale Kräfte abzufangen sind, sondern auch Biegemomente bzw. Kippbelastungen aufzufangen sind. Die Verwindungs- und Kippproblematik wird dabei noch verschärft, wenn die Mitte bzw. das Zentrum des Lagers auszusparen ist, um das abzustützende Bauteil, bspw. den genannten Kranstützmast, durch das Lager hindurchtreten zu lassen, bspw. um am hindurchtretenden Teil einen Drehantrieb anbringen zu können. Die Lagerringe eines solchen mittenfreien Großwälzlagers können aus Platzgründen insbesondere in radialer Richtung nicht beliebig groß bauen, so dass die erreichbaren Flächenträgheitsmomente der Laufringe begrenzt sind.

Hinzu kommt dabei die recht spezielle Belastungscharakteristik solcher Großringlager, die in den typischen Anwendungsfällen wie bspw. als Kranturm- oder Kranmastlager oder Rotorblattlager zum Verstellen des Pitchwinkels der Rotorblätter von Windkraftanlagen einen großen Teil ihrer Betriebs- bzw. Lebenszeit still stehen, dabei jedoch trotzdem hohen Lasten unterworfen sind. Durch den hohen Anteil an Stillstandszeiten bei trotzdem hohen Lasten ist es nicht ganz einfach, ermüdungsbedingte Verformungen und Oberflächenbeschädigungen der Laufbahnen und Wälzkörper dauerhaft zu vermeiden und ein ruckfreies Anfahren bzw. Andrehen aus dem Stillstand zu gewährleisten, zumal die Drehgeschwindigkeiten recht niedrig sind. Um die genannten hohen Lasten im Stillstand ohne bleibende Verformungen an den Laufbahnen und/oder den Wälzkörpern abtragen zu können, gleichwohl aber ein ruckfreies Anfahren aus dem Stillstand zu gewährleisten, werden gerne Zylinderrollenlager mit recht großen Zylinderdurchmessern verwendet, die im Gegensatz zu Nadellagern, die sehr kleine Wälzkörperdurchmesser besitzen, oder zu Kugellagern eine gewisse Elastizität zeigen, die Lasten besser verteilen und kleinere Flächenpressungen erzielen können. Allerdings kommt es bei solchen Zylinderrollenlagern mit recht großen Zylinderdurchmessern zu Platzproblemen, da solche Zylinderrollenlager recht groß bauen.

Ein Großwälzlager der eingangs genannten Art zeigt bspw. die Schrift EP 20 92 204 B1, gemäß der der Nasenring des einen Laufrings durch zwei gegenüberliegende Axiallager und zwei gegenüberliegende Radiallager in der Nut des anderen Laufrings eingespannt sein soll, wobei die genannten gegenüberliegenden Axiallager und Radiallager unerwünschte Verformungen des Nasenringes verhindern und eine Ablösung der Laufringe in radialer Richtung vermeiden sollen. Ein ähnliches Großwälzlager und dessen Einbausituation am Stützmast eines Schiffkrans zeigt die Schrift WO 2008/088 213 A2. Während die genannten Schriften sich im Wesentlichen mit der Problematik des Ablösens der Radiallager in Folge von Verwindungen der Laufringe befassen und ein solches Lupfen der Radiallager durch das Einspannen des Nasenrings von gegenüberliegenden Mantelflächenseiten her vermeiden wollen, kommt es indes immer noch zu Verkantungen und Verwindungen im Bereich der Axiallager.

Üblicherweise machen die vertikalen Kranbelastungen und die entsprechenden Reaktionskräfte in der Kranmastlagerung immer noch einen großen bzw. beträchtlichen Teil der Drehlagerbelastung aus, so dass üblicherweise das untere Axiallager, das die vertikalen Kranlasten abfangen muss, in Form eines tragkräftigen Zylinderrollenlagers ausgebildet ist, dessen Zylinderrollen eine relativ große Zylinderrollenbreite besitzen, um eine ausreichend große Berührungslinie zu haben und die Flächenpressungen erträglich zu halten. Andererseits reagieren solche breiten Zylinderrollenlager kritisch auf Verkippungen bzw. Schiefstellungen der Laufbahnen zueinander, da hier sehr rasch nur noch ein sehr kleiner Teil der Zylinderrollen tatsächlich trägt.

Insofern wurde bereits vorgeschlagen, die Anzahl der verwendeten Lagerbaugruppen zu erhöhen, um eine weitere, noch stabilere Abstützung des Nasenrings zu erzielen. Beispielsweise schlägt die Schrift WO 2015/055317 A2 die Verwendung von drei Axiallagern vor, von denen zwei auf einer Nasenringseite und das dritte auf der gegenüberliegenden Nasenringseite angeordnet sind. Zusätzlich wird der Nasenring durch zwei gegenüberliegende Radiallager abgestützt. Die Erhöhung der Lagerbaugruppenanzahl kann jedoch zu einem vergrößerten Bauvolumen führen, da die Wälzlager nicht nur senkrecht zur Wälzkörperdrehachse Luft benötigen, sondern auch in Richtung der Wälzkörper Drehachsen voneinander zu beabstanden sind, wenn mehrere Wälzlager an einer Nasenringseite nebeneinander angeordnet werden. Bei beengten Einbauverhältnissen kann es hierdurch zu Problemen kommen, zumindest wenn der Nasenring und/oder daran abgestützte Ringabschnitte des Nutringes nicht zu sehr ausgedünnt werden, was die durch die größere Lagerbaugruppenanzahl erzielte Erhöhung der Kipp- und Verwindungssteifigkeit wieder zunichte machen würde.

Der vorliegenden Erfindung liegt die Aufgabe zugrunde, ein verbessertes Drehlager der eingangs genannten Art zu schaffen, das Nachteile des Standes der Technik vermeidet und letzteren in vorteilhafter Weise weiterbildet. Insbesondere soll ein mittenfreies Großringlager geschaffen werden, das bei kompakter Bauweise für beengte Einbausituationen hohe Axiallasten abfangen kann, ohne hierbei gegenüber Kippbelastungen und Schiefstellungen der Laufbahnen anfällig zu sein.

Erfindungsgemäß wird die genannte Aufgabe durch ein Drehlager gemäß Anspruch 1 gelöst. Bevorzugte Ausgestaltungen der Erfindung sind Gegenstand der abhängigen Ansprüche.

Es wird also vorgeschlagen, nicht nur Wälzlager zwischen dem Nasenring und der Nut des anderen Laufrings vorzusehen, sondern Wälzlager mit Gleitlagern zu mischen, sodass der Nasenring an der Nut sowohl durch Gleitlager als auch durch Wälzlager abgestützt ist und ein Teil der Lasten durch Gleitlager und ein anderer Teil der Lasten durch Wälzlager abgetragen wird. Erfindungsgemäß umfassen die mehreren Lagerbaugruppen zwischen dem Nasenring und der genannten Nut zumindest ein Gleitlager und zumindest ein Wälzlager. Durch eine geschickt gewählte Kombination von Gleit- und Wälzlagern können bei einer kompakten Bauweise, die auch für beengte Einbausituationen geeignet ist, ein ruckfreies Anfahren aus dem Stillstand erzielt und sowohl im Stillstand als auch im Drehbetrieb ein gezieltes Abtragen der verschiedenen Kraftkomponenten erreicht werden, um Verwindungen oder gar ein Verkippen des Nasenrings zur Nut zu vermeiden.

In Weiterbildung der Erfindung ist dabei zumindest ein Radiallager als Gleitlager ausgebildet, während zumindest ein Axiallager als Wälzlager ausgebildet sein kann. Da in typischen Anwendungsfällen die Axialkräfte häufig überwiegen, oft auch bedeutend größer sind als die radialen Lagerkräfte, kann durch das als Axiallager fungierende Wälzlager ein ruckfreies Anfahren aus dem Stillstand erzielt werden, während durch das zumindest eine Gleitlager, das als Radiallager fungiert, eine radial besonders klein bauende Lagerstruktur erreicht werden kann, die trotzdem in ausreichendem Maße die Radialkräfte abträgt.

Um auch in radialer Richtung wirkende Lagerkräfte geschickt abzutragen und ein ruckfreies Anfahren und Stillsetzen zu erzielen, ist gemäß der Erfindung bei den Axiallager ein Mischen von Gleit- und Wälzlagern vorgesehen. Dabei ist zumindest eines von mehreren Radiallagern als Gleitlager und zumindest ein anderes der mehreren Radiallager als Wälzlager ausgebildet sein, wobei die als Radiallager fungierenden Gleit- und Wälzlager auf gegenüberliegenden Seiten des Nasenrings angeordnet sind.

Sind in der genannten Weise Radiallager auf gegenüberliegenden Seiten des Nasenrings vorgesehen, kann in vorteilhafter Weise das als Gleitlager ausgebildete Radiallager auf einer äußeren Nasenringseite angeordnet sein, während das als Wälzlager angeordnete Radiallager auf einer inneren Nasenringseite angeordnet sein kann. Durch die Anordnung des Gleitlagers auf der äußeren Nasenringseite wird Platz für den Laufring-Randsteg geschaffen, der den Nasenring von außen her fingerartig umgreift, sodass bei radial kompakter Bauweise der genannte Laufring-Randsteg mehr Fleisch haben kann bzw. weniger ausgedünnt werden muss. Hierdurch kann trotz kompakterer Bauweise eine nochmals erhöhte Steifigkeit erzielt werden.

In Weiterbildung der Erfindung können das als Radiallager fungierende Gleitlager und das gegenüberliegende, ebenfalls als Radiallager fungierende Wälzlager einander in Radialrichtung betrachtet überlappen, jedoch in Axialrichtung vorteilhafter Weise zueinander leicht versetzt angeordnet sein, sodass das genannte Gleitlager und das genannte Wälzlager nicht in derselben Ebene liegen. Vorteilhafterweise kann dabei das Gleitlager weiter zu einem der Axiallager hin versetzt sein, während das Gleitlager mehr mittig zwischen den gegenüberliegenden Axiallagern angeordnet ist.

Betrachtet man eine virtuelle Mittelebene, die sich senkrecht zur Lagerdrehachse zwischen den beiden Axiallagern erstreckt, und zwar äquidistant zu den auf gegenüberliegenden Nasenringseiten angeordneten Axiallagern, das heißt von diesen beiden Axiallagern gleich weit beabstandet, ist vorteilhafterweise das als Radiallager fungierende Gleitlager weiter von der genannten Mittelebene beabstandet als das ebenfalls als Radiallager fungierende Wälzlager. Hierdurch kann eine gleichmäßigere Abtragung von Radialkräften mit verringerter Verwindungsneigung des Nasenrings erzielt werden, ohne hierbei Platzprobleme zu schafften. Das Gleitlager kann ohne Platzprobleme zu schaffen näher an eines der Axiallager herangerutscht werden, während das eher mittig zwischen Axiallagern positionierte Wälzlager, das als Radiallager fungiert, die entstehenden radialen Lagerkräfte mehr mittig zwischen den Axiallagern und damit ausbalanciert abtragen kann.

In vorteilhafter Weiterbildung der Erfindung kann das als Radiallager fungierende Gleitlager in Radialrichtung betrachtet mit einem der Axiallager überlappend angeordnet sein. Das genannte Gleitlager kann also sozusagen eines der Axiallager umgreifen.

Die Axiallager, die den Nasenring an der Nut in Richtung der Drehachse des Drehlagers abstützen, können in vorteilhafter Weiterbildung der Erfindung jeweils als Wälzlager ausgebildet sein, um die oft sehr hohen Axialkräfte bestmöglich abzutragen. Hierbei können vorteilhafterweise zwei Axiallager vorgesehen sein, die auf gegenüberliegenden Seiten des Nasenrings angeordnet sind.

In Axialrichtung betrachtet können die beiden Axiallager einander überlappen, dabei jedoch vorteilhafterweise leicht zueinander versetzt sein, sodass ein Axiallager einen kleineren Durchmesser besitzt als das andere Axiallager.

Gegebenenfalls kann auch vorgesehen sein, den Nasenring gegenüber der Nut und damit den einen Laufring gegenüber dem anderen Laufring durch ein drittes Axiallager abzustützen, um auch mit schmäler bauenden Lagern hohe Axialkräfte abfangen zu können und auf verschiedene Abstützpunkte verteilen zu können. Dabei werden die zwei auf derselben Nasenringstirnseite angeordneten Axiallager nicht nur quer voneinander beabstandet, sondern auch in axialer Richtung zueinander versetzt, um bzgl. Verwindungen und Schiefstellungen andere und damit eine höhere Robustheit zu erzielen. Vorteilhafterweise ist der Nasenring durch ein drittes Axiallager in axialer Richtung an der Nut abgestützt, wobei zwei Axiallager auf derselben Seite des Nasenrings auf separaten, in axialer Richtung des Wälzlagers zueinander versetzten Laufbahnen angeordnet sind. Durch den Axialversatz der Laufbahnen der beiden auf derselben Nasenringstirnseite angeordneten Axiallager erhalten die Axiallager, obwohl sie auf derselben Nasenringseite angeordnet sind, unterschiedliche Hebelstützverhältnisse, so dass eine bessere Abstützung bei Verwindungen und Laufbahnschiefstellungen erzielt werden kann und nie beide Axiallager gleichzeitig in derselben Weise Verkantungen oder Abhebungen unterworfen sind.

Vorteilhafterweise können die beiden auf derselben Nasenringstirnseite angeordnete Axiallager jeweils eine Breite besitzen, die kleiner ist als die Breite des auf der gegenüberliegenden Nasenringstirnseite angeordneten Axiallagers. Werden als Axiallager Zylinderrollenlager verwendet, ist die genannte Breite die Länge der zylindrischen Wälzkörper und/oder die Breite der Laufbahn des Lagers. Werden als Axiallager Gleitlager verwendet, ist die genannte Breite die Breite des Breitschuhelements bzw. bei Verwendung mehrerer Gleitpolster die Summe der Breiten der Gleitschuhe, und/oder die Breite der Laufbahn des Gleitlagers. Durch die Verwendung zweier unabhängiger, relativ schmaler Laufbahnen für die beiden auf derselben Nasenringstirnseite angeordneten Axiallager ist eine Anpassung der Schiefstellung aus einer Verformung der Anschlusskonstruktion besser möglich. Zudem bringen zwei solche abgesetzte, relativ schmale Laufbahnen in der Summe einen längeren Linienkontakt zwischen Wälzkörpern und Laufbahnen bzw. zwischen Gleitschuh und Laufbahn, insbesondere auch wenn aufgrund von Verformungen geringfügige Schiefstellungen der Laufbahnen entstehen. Zudem sind schmale Laufbahnen auch fertigungstechnisch mit höherer Präzision zu fertigen, so dass auch Formtoleranzen weniger auftreten und ins Gewicht schlagen.

Der genannte Axialversatz der beiden auf derselben Stirnflächenseite angeordneten Axiallager kann grundsätzlich unterschiedlich stark ausgebildet bzw. bemessen sein. Um einerseits eine spürbare Abkopplung bezüglich Verwindungen und unterschiedliche Stützverhältnisse zu erreichen, beträgt der Versatz in Weiterbildung der Erfindung zumindest 10%, jedoch weniger als 200% des genannten Wälzkörperdurchmessers.

In Weiterbildung der Erfindung kann auch bei den Axiallagern eine Mischung aus Gleit- und Wälzlagern vorgesehen werden. Insbesondere wenn in der vorgenannten Weise drei Axiallager vorgesehen sind, kann eines der genannten Axiallager als Gleitlager ausgebildet sein, wobei vorzugsweise um eines der beiden auf derselben Nasenringseite angeordneten Axiallager als Gleitlager ausgebildet sein kann, sodass auf dieser Nasenringseite ein Gleitlager und ein Wälzlager miteinander kombiniert sind.

Betrachtet man die auf gegenüberliegenden Stirnseiten des Nasenrings angeordneten Axiallager, können die Axiallager vorteilhafterweise unterschiedliche Laufbahndurchmesser besitzen, wobei in vorteilhafter Weiterbildung der Erfindung zumindest eines der beiden auf derselben Nasenringstirnseite angeordneten Axiallager, bspw. das dortige Gleitlager, keine Überdeckung mit dem auf der anderen Nasenringstirnseite angeordneten Axiallager aufweist, wenn man die Axiallager in Axialrichtung betrachtet. Die genannte Axialrichtung meint dabei die Drehachse des Wälzlagers.

In vorteilhafter Weiterbildung der Erfindung kann dabei vorgesehen sein, dass eines der zwei auf derselben Nasenringstirnseite angeordneten Axiallager, bswp. das Wälzlager, das auf der anderen Nasenringstirnseite angeordnete Axiallager in axialer Richtung betrachtet überdeckt, während das andere der zwei auf derselben Nasenringstirnseite liegenden Axiallager, bspw. das Gleitlager, keine Überdeckung mit dem genannten, auf der anderen Nasenringstirnseite liegenden Axiallager hat.

Die Erfindung wird nachfolgend anhand bevorzugter Ausführungsbeispiele und zugehöriger Zeichnungen näher erläutert. In den Zeichnungen zeigen:

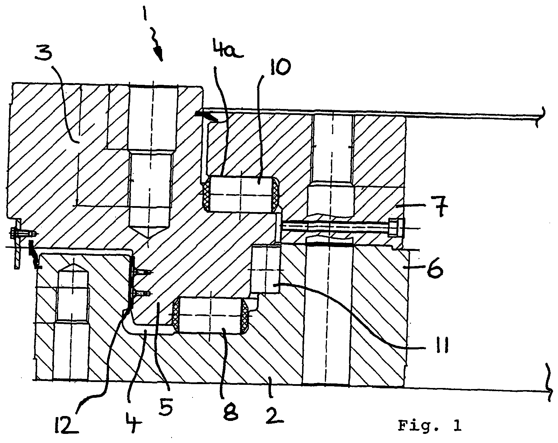

- Fig. 1:: einen Längshalbschnitt eines mittenfreien Großwälzlagers nach einer vorteilhaften Ausführung der Erfindung, gemäß der die beiden Laufringe durch zwei Axiallager in Form von Zylinderrollenlagern und zwei Radiallagern in Form eines Zylinderrollenlagers und eines Gleitlagers gegeneinander abgestützt sind, und

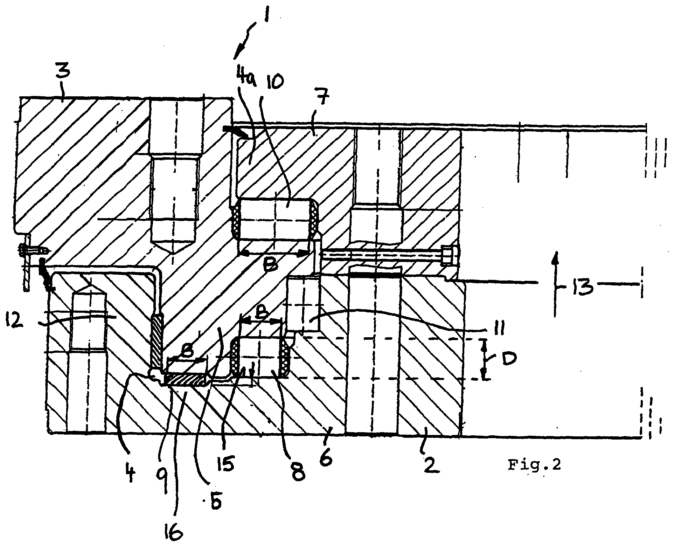

- Fig. 2:: einen Längshalbschnitt durch ein mittenfreies Großwälzlager gemäß einer weiteren Ausführung der Erfindung, bei der die beiden Laufringe durch drei Axiallager in Form eines Gleitlagers und zwei Zylinderrollenlagern und zwei Radiallagern in Form eines Gleitlagers und eines Zylinderrollenlagers gegeneinander abgestützt sind.

Wie Fig. 1 und 2 zeigen, kann das Wälzlager 1 zwei Laufringe 2 und 3 umfassen, von denen der eine Laufring 2 einen Innenring und der andere Laufring 3 einen Außenring bildet. Der genannte Innenring 2 kann einen kleineren Innendurchmesser als der Außenring 3 besitzen und/oder der Außenring 3 kann einen größeren Außendurchmesser als der genannte Innenring 2 besitzen.

Der eine Laufring 2, vorzugsweise der Innenring, kann eine zum anderen Laufring 3, vorzugsweise zum Außenring hin, eine offene Nut 4 besitzen, in die der andere Laufring 3 mit einem daran vorgesehenen Nasenring 5 unter Bildung eines Spalts bzw. mit allseitigem Abstand eingreift. Die genannte Nut 4 kann dabei vorteilhafterweise den Nasenring 5 von vier Seiten her umgreifen, und zwar an zwei gegenüberliegenden Manteflächenseiten und an zwei gegenüberliegenden Stirnflächenseiten des genannten Nasenrings 5.

Die genannte Nut 4 kann hierbei eine - grob gesprochen - U-förmige Bodenkontur umfassen, bei der der Nutboden - gemäß Fig. 1 rechts und links - von zwei Lagerringschenkeln umgriffen ist. Ferner kann die genannte Nut 4 auf einer dem Nutboden gegenüberliegenden Seite einen quer vorspringenden Fortsatz 4a besitzen, der den Nasenring 5 auf einer dem Nutboden gegenüberliegenden Seite stirnseitig umgreift. Insgesamt kann die genannte Nut 4 hinterschnitten ausgebildet sein. Um den Nasenring 5 in die genannte Nut 4 einsetzen zu können, kann der die Nut 4 aufweisende Laufring 2 aus einem Tragring 6 und einem darauf aufsetzbaren Haltering 7 zusammengesetzt sein, vgl. Fig. 1 und 2.

Der genannte Nasenring 5 kann dabei, wie Fig. 1 zeigt, gegenüber der Nut 4 durch zwei Axiallager 8 und 10 sowie durch zwei Radiallager 11 und 12 abgestützt sein. Vorteilhafterweise sind dabei die beiden Axiallager 8 und 10 auf gegenüberliegenden Nasenringstirnseiten angeordnet. Auch die Radiallager 11 und 12 können vorteilhafterweise auf gegenüberliegenden Seiten, nämlich gegenüberliegenden Mantelflächenseiten des genannten Nasenrings 5 angeordnet sein, sodass der Nasenring 5 sowohl in axialer Richtung als auch in radialer Richtung jeweils zwischen auf gegenüberliegenden Seiten befindlichen Lagern sandwichartig eingebettet bzw. abgestützt ist. Der Nasenring 5 ist somit allseitig an der Nut 4 abgestützt.

Wie Fig. 1 zeigt, umfassen die genannten Lager dabei sowohl Gleit- als auch Wälzlager. Insbesondere kann eines der beiden Radiallager 12 als Gleitlager ausgebildet sein, während das gegenüberliegende Radiallager 11 als Wälzlager, insbesondere Zylinderrollenlager ausgebildet sein kann. Grundsätzlich wäre es auch möglich, beide Radiallager 11 und 12 als Gleitlager auszubilden bzw. mehrere Gleitlager als Radiallager vorzusehen, insbesondere auf gegenüberliegenden Nasenringseiten anzuordnen. Vorteilhafterweise kann durch die in Fig. 1 gezeigte Mischung von Gleit- und Wälzlagern jedoch eine kompakte Bauweise mit einer günstigen Kraftabtragung, die ein ruckfreies Anfahren erlaubt, kombiniert werden.

Wie Fig. 1 zeigt, können die beiden Radiallager 11 und 12 in radialer Richtung betrachtet einander überlappen, jedoch zueinander leicht versetzt angeordnet sein.

Insbesondere kann vorteilhafterweise das Gleitlager weiter zu einem der Axiallager 8 hin versetzt sein, während das gegenüberliegende Wälzlager 11 mehr mittig zwischen den beiden Axiallagern angeordnet ist. Gemäß der Orientierung der Fig. 1 kann das Gleitlager 12 und das Wälzlager 11 weiter oben angeordnet sein. Insbesondere kann das Gleitlager, das als Radiallager 12 fungiert, eines der Axiallager 8 in radialer Richtung betrachtet überdecken bzw. umgreifen.

Die beiden Axiallager 8 und 10 können, wie Fig. 1 zeigt, in axialer Richtung betrachtet einander überdecken, jedoch leicht zueinander versetzt sein, das heißt eines der Axiallager 8 kann einen größeren Durchmesser besitzen als das andere Axiallager 10. Die beiden Axiallager 8 und 10 können vorteilhafterweise als Zylinderrollenlager ausgebildet sein. Auch das als Radiallager 11 fungierende Wälzlager kann als Zylinderrollenlager ausgebildet sein, wobei es jedoch auch denkbar wäre, das genannte Radiallager 11 als Kugellager auszubilden.

Wie Fig. 1 zeigt, können die als Axiallager 8 und 10 fungierenden Wälzlager einen größeren Zylinderrollendurchmesser besitzen als das radialwirksame Wälzlager 11 und/oder eine größere Zylinderrollenbreite besitzen als das genannte axialwirksame Zylinderrollenlager 11. Die beiden genannten Axiallager 8 und 10 können hierbei zueinander im Wesentlichen gleich dimensioniert sein, das heißt gleiche Zylinderrollendurchmesser und gleiche Zylinderrollenbreiten besitzen, vgl. Fig. 1.

Gemäß einer alternativen Ausführung, die in Fig. 2 gezeigt ist, kann der genannte Nasenring 5 gegenüber der Nut 4 auch durch drei Axiallager 8, 9 und 10 sowie durch zwei Radiallager 11 und 12 abgestützt sein. Vorteilhafterweise können dabei zwei der genannten Axiallager 8 und 9 auf derselben - gemäß Fig. 1 der unteren - Nasenringstirnseite und das dritte Axiallager 10 auf der gegenüberliegenden Nasenringstirnseite angeordnet sein. Auch die Radiallager 11 und 12 können auf gegenüberliegenden Seiten, nämlich gegenüberliegenden Mantelflächenseiten des genannten Nasenrings 5 angeordnet sein, so dass der Nasenring 5 sowohl in axialer Richtung als auch in radialer Richtung zwischen auf gegenüberliegenden Seiten befindlichen Lagern sandwichartig eingebettet bzw. abgestützt ist. Der Nasenring 5 ist allseitig an der Nut 4 abgestützt.

Wie Fig. 2 zeigt, können die beiden auf derselben Nasenringstirnseite vorgesehenen Axiallager 8 und 9 nicht nur in radialer Richtung voneinander beabstandet und auf verschiedenen Laufbahnen angeordnet sein, sondern auch in axialer Richtung - d.h. in Richtung des Pfeils 13 - zueinander versetzt angeordnet sein, so dass die beiden Axiallager 8 und 9 nicht auf derselben Höhe liegen.

In Weiterbildung der Erfindung kann von den drei Axiallagern 8,9 und 10 zumindest ein Axiallager 9 als Gleitlager ausgebildet sein, vorzugsweise eines der beiden Axiallager 8 und 9, die auf derselben Nasenringstirnseite angeordnet sind. Die beiden anderen Axiallager 8 und 10 können indes als Wälzlager, insbesondere Zylinderrollenlager ausgebildet sein, sodass auch bei den Axiallagern 8,9 und 10 eine Mischungs aus Gleit- und Wälzlagern vorgesehen ist.

Wie Fig. 2 zeigt, kann vorteilhafterweise das äußere der beiden Axiallager 9 und 8, die auf derselben Nasenringstirnseite angeordnet sind, als Gleitlager ausgebildet sein, während das innere Axiallager 8 als Wälzlager ausgebildet sein kann. Grundsätzlich wäre es auch möglich, das innere Axiallager 8 als Gleitlager und das äußere Axiallager 9 als Wälzlager auszubilden. Nach einer weiteren Alternative wäre es auch möglich, zwei der drei Axiallager als Gleitlager und nur eines als Wälzlager auszubilden, wobei die beiden Gleitlager in diesem Fall auf derselben Nasenringstirnseite oder auch auf gegenüberliegenden Nasenringstirnseiten angeordnet werden können.

Die beiden auf derselben Nasenringstirnseite angeordneten Axiallager 8 und 9 können dabei eine Breite B - gemessen in Radialrichtung - besitzen, die jeweils kleiner ist als die Breite des auf der gegenüberliegenden Nasenringstirnseite angeordneten Axiallagers 10, wobei die Summe der beiden Breiten der beiden Axiallager 8 und 9 etwa der Breite des genannten anderen Axiallagers 10 entsprechen kann.

Die beiden auf derselben Nasenringstirnseite liegenden Axiallager 8 und 9 können derart positioniert sein, dass das eine Axiallager 9 sich bei Betrachtung in axialer Richtung mit dem auf der gegenüberliegenden Nasenringstirnseite liegenden Axiallager 10 überdeckt, während das andere Axiallager 8 keine solche Überdeckung zeigt.

Die beiden Radiallager 11 und 12 können einander gegenüberliegend angeordnet sein. Hiervon unabhängig kann es vorteilhaft sein, wenn die beiden Radiallager 11 und 12 zwischen den Axiallagern 8, 9 und 10 angeordnet sind, vgl. Fig. 1.

## Patentansprüche

1. Drehlager, insbesondere mittenfreies Großringlager, mit zwei konzentrischen Laufringen (2,3), von denen der eine Laufring (2) eine zum anderen Laufring (3) hin offene Nut (4) und der andere Laufring (3) einen in die genannte Nut (4) eingreifenden Nasenring (5) umfasst, wobei der Nasenring (5) an der Nut (4) durch mehrere Lagerbaugruppen (8,9,10,11,12) abgestützt ist, die zumindest zwei Axiallager (8,9,10) zum Abstützen in axialer Richtung, die auf gegenüberliegenden Nasenringstirnseiten angeordnet sind, und zumindest ein Radiallager (11,12) zum Abstützen in radialer Richtung umfassen, wobei die Lagerbaugruppen (8,9,10,11,12) sowohl Gleitlager als auch Wälzlager umfassen, **dadurch gekennzeichnet, dass** mehrere Radiallager (11, 12) auf gegenüberliegenden Mantelflächenseiten des Nasenrings (5) angeordnet sind, von denen zumindest eines (12) als Gleitlager und zumindest ein anderes (11) als Wälzlager ausgebildet ist.

2. Drehlager nach dem vorhergehenden Anspruch, wobei zumindest ein Axiallager (8,10) als Wälzlager ausgebildet ist.

3. Drehlager nach einem der vorhergehenden Ansprüche, wobei das als Radiallager fungierende Gleitlager auf der äußeren Nasenringseite und das als Radiallager fungierende Wälzlager auf der inneren Nasenringseite angeordnet ist.

4. Drehlager nach einem der vorhergehenden Ansprüche, wobei die Radiallager (11,12) einander in Radialrichtung betrachtet überlappen, jedoch in Axialrichtung zueinander versetzt angeordnet sind, wobei vorzugsweise das Gleitlager von einer Mittelebene, die sich äquidistant zu auf gegenüberliegenden Nasenringseiten angeordneten Axiallagern (8,9,10) senkrecht durch die Lagerdrehachse erstreckt, weiter beabstandet ist als das dem genannten Gleitlager gegenüberliegende Wälzlager.

5. Drehlager nach einem der vorhergehenden Ansprüche, wobei das zumindest eine als Radiallager (12) fungierende Gleitlager in radialer Richtung betrachtet ein als Axiallager (8) fungierendes Wälzlager überlappt.

6. Drehlager nach einem der vorhergehenden Ansprüche, wobei sämtliche Axiallager (8,9,10) als Wälzlager, insbesondere Zylinderrollenlager, ausgebildet sind und lediglich das zumindest eine Axiallager (12) als Gleitlager ausgebildet ist.

7. Drehlager nach einem der Ansprüche 1 bis 5, wobei die mehreren Axiallager (8,9,10) zumindest ein Gleitlager und zumindest ein Wälzlager umfassen, wobei vorzugsweise auf einer Nasenringseite lediglich Wälzlager und auf der gegenüberliegenden Nasenringseite zumindest ein Gleitlager und zumindest ein Wälzlager vorgesehen sind.

8. Drehlager nach einem der vorhergehenden Ansprüche, wobei der Nasenring (5) an der Nut (4) und damit die beiden Laufringe (2,3) aneinander durch genau zwei Axiallager (8,10) und genau zwei Radiallager abgestützt sind, wobei genau eines der Radiallager (12) ein Gleitlager ist und die beiden Axiallager (8,10) Wälzlager sind.

9. Drehlager nach einem der vorhergehenden Ansprüche, wobei das zumindest eine Gleitlager einen Durchmesser von mehr als 1 Meter besitzt.

## Claims

1. Rotary bearing, in particular a large open-centered ring bearing, comprising two concentric bearing races (2, 3), of which one bearing race (2) has a groove (4) which is open toward the other bearing race (3), and the other bearing race (3) has a lug ring (5) that engages in the aforementioned groove (4), wherein the lug ring (5) is supported against the groove (4) by a plurality of bearing assemblies (8, 9, 10, 11, 12) that comprise at least two axial bearings (8, 9, 10) mounted on opposite lug ring end faces to provide support in the axial direction, and at least one radial bearing (11, 12) to provide support in the radial direction,
wherein the bearing assemblies (8, 9, 10, 11, 12) include both sliding bearings and rolling bearings, **characterized in that** multiple radial bearings (11, 12) are arranged on opposite shell surface sides of the lug ring (5), of which at least one (12) is configured as a sliding bearing and at least one other (11) is configured as a rolling bearing

2. Rotary bearing according to the preceding claim, wherein at least one axial bearing (8, 10) is configured as a rolling bearing.

3. Rotary bearing according to one of the preceding claims, wherein the sliding bearing that functions as radial bearing is arranged on the outer side of the lug ring and the rolling bearing that functions as a radial bearing is preferably arranged on the inner side of the lug ring.

4. Rotary bearing according to one of the preceding claims, wherein the radial bearings (11, 12) overlap with each other as viewed in the radial direction, but are offset from each other in the axial direction, wherein the sliding bearing is preferably further distanced from a central plane, which extends equidistantly toward axial bearings (8, 9, 10) arranged on opposite sides of the lug ring and perpendicularly through the rotary axis of the bearing, than the rolling bearing lying opposite the sliding bearing.

5. Rotary bearing according to one of the preceding claims, wherein the at least one sliding bearing that functions as a radial bearing (12) overlaps, when viewed in the radial direction, with a rolling bearing that functions as an axial bearing (8).

6. Rotary bearing according to one of the preceding claims, wherein all of axial bearings (8, 9, 10) are configured as rolling bearings, in particular as cylindrical roller bearings, and only the at least one axial bearing (12) is configured as a sliding bearing.

7. Rotary bearing according to one of claims 1 to 5, wherein the multiple axial bearings (8, 9, 10) include at least one sliding bearing and at least one rolling bearing, wherein preferably only rolling bearings are provided on one side of the lug ring and at least one sliding bearing and at least one rolling bearing are provided on the opposite side of the lug ring.

8. Rotary bearing according to one of the preceding claims, wherein the lug ring (5) is supported against the groove (4) and thus the two bearing races (2, 3) are supports against each other by exactly two axial bearings (8, 10) and exactly two radial bearings, wherein exactly one of the radial bearings (12) is a sliding bearing and the two axial bearings (8, 10) are rolling bearings.

9. Rotary bearing according to one of the preceding claims, wherein the at least one sliding bearing has a diameter larger than 1 meter.

## Revendications

1. Coussinet de pivotement, notamment palier à grand anneau à centre libre, avec deux bagues de roulement concentriques (2, 3), dont l'une des bagues de roulement (2) comporte une goujure (4) ouverte vers l'autre bague de roulement (3) et l'autre bague de roulement (3) une bague nasale (5) prenant dans ladite goujure (4), sachant que la bague nasale (5) est supportée sur la goujure (4) par plusieurs assemblages de paliers (8, 9, 10, 11, 12), qui comportent au moins deux paliers lisses de butée (8, 9, 10) en vue du support dans la direction axiale, qui sont disposés sur des faces frontales de bague nasale situées face à face, et au moins un palier radial (11, 12) en vue du support dans la direction radiale, sachant que les assemblages de paliers (8, 9, 10, 11, 12) comportent aussi bien des paliers à glissement que des palier à roulement, **caractérisé en ce que** plusieurs paliers radiaux (11, 12) sont disposés sur des côtés opposés de la surface d'enveloppe de la bague nasale (5), dont au moins un (12) est constitué comme palier à glissement et au moins un autre (11) comme palier à roulement.

2. Coussinet de pivotement selon la revendication précédente, sachant qu'au moins un palier lisse de butée (8, 10) est constitué comme palier à roulement.

3. Coussinet de pivotement selon une quelconque des revendications précédentes, sachant que le palier à glissement fonctionnant comme palier radial est disposé sur la face externe de bague nasale et le palier à roulement fonctionnant comme palier radial est disposé sur la face interne de bague nasale.

4. Coussinet de pivotement selon une quelconque des revendications précédentes, sachant que les paliers radiaux (11, 12) vus dans la direction radiale, se chevauchent, mais sont disposés décalés l'un par rapport à l'autre dans la direction axiale, sachant que de préférence le palier à glissement est écarté d'avantage d'un plan central qui s'étend verticalement à travers l'axe de rotation du palier de manière équidistante aux paliers lisses de butée (8, 9, 10) disposés sur des faces de bagues nasales situées face à face, que le palier à roulement situé face audit palier lisse de butée.

5. Coussinet de pivotement selon une quelconque des revendications précédentes, sachant qu'au moins l'un des paliers à glissement fonctionnant comme palier radial (12), vu dans la direction radiale, chevauche un palier à roulement fonctionnant comme palier lisse de butée (8).

6. Coussinet de pivotement selon une quelconque des revendications précédentes, sachant que tous les paliers lisses de butée (8, 9, 10) sont constitués comme paliers à roulement, notamment comme roulements à rouleaux cylindriques, et que seulement l'un des paliers lisses de butée (12) est constitué comme palier à glissement.

7. Coussinet de pivotement selon une quelconque des revendications 1 à 5, sachant que les plusieurs paliers lisses de butée (8, 9, 10) comportent au moins un palier à glissement et au moins un palier à roulement, sachant que de préférence, sur un côté de la bague nasale, uniquement des paliers à roulement sont prévus, et sur le côté de la bague nasale situé en face, au moins un palier à glissement et au moins un palier à roulement.

8. Coussinet de pivotement selon une quelconque des revendications précédentes, sachant que la bague nasale (5) est supportée sur la goujure (4) et par conséquent les deux bagues de roulement (2, 3) l'une contre l'autre par exactement deux paliers lisses de butée (8, 10) et exactement deux paliers radiaux, sachant qu'exactement l'un des paliers radiaux (12) est un palier à glissement et les deux paliers lisses de butée (8, 10) sont des paliers à roulement.

9. Coussinet de pivotement selon une quelconque des revendications précédentes, sachant qu'au moins l'un des paliers à glissement possède un diamètre de plus de 1 mètre.
